(19) Europäisches Patentamt / European Patent Office / Office européen des brevets

(11) **EP 4 333 246 B1**

(12) **EUROPEAN PATENT SPECIFICATION**

(45) Date of publication and mention
of the grant of the patent:
**31.12.2025 Bulletin 2026/01**

(21) Application number: **22890480.1**

(22) Date of filing: **07.11.2022**

(51) International Patent Classification (IPC):
**H02J 7/00** (2006.01)    **H01M 10/42** (2006.01)

(52) Cooperative Patent Classification (CPC):
**H01M 10/42; H01M 10/4207; H01M 10/425;
H01M 10/482; H02J 7/0016; H02J 7/0047;**
H01M 2010/4271; H02J 2207/10; Y02E 60/10

(86) International application number:
**PCT/KR2022/017371**

(87) International publication number:
**WO 2023/080749 (11.05.2023 Gazette 2023/19)**

(54) **BATTERY SYSTEM**

BATTERIESYSTEM

SYSTÈME DE BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.11.2021 KR 20210152521**

(43) Date of publication of application:
**06.03.2024 Bulletin 2024/10**

(73) Proprietor: **LG Energy Solution, Ltd.
Seoul 07335 (KR)**

(72) Inventor: **YOON, Sunwoo
Daejeon 34122 (KR)**

(74) Representative: **Plasseraud IP
104 Rue de Richelieu
CS92104
75080 Paris Cedex 02 (FR)**

(56) References cited:
**EP-A1- 3 290 936        JP-A- 2014 121 120
KR-A- 20180 087 012    KR-A- 20190 037 882
KR-A- 20210 092 013    US-B2- 8 089 248**

**Description**

**[Technical Field]**

Cross-reference to related application

This application claims priority to and the benefit of Korean Patent Application No. 10-2021-0152521 filed in the Korean Intellectual Property Office on November 08, 2021.

The present disclosure relates to a battery system.

**[Background Art]**

When an insulated communication method between a master battery management system (BMS) and a slave BMS is applied, as a method of diagnosing whether a battery monitoring integrated circuit (BMIC) monitoring a plurality of battery cells connected to the slave BMS is normal, whether communication is possible has been used. When there is no response to a periodic communication from the BMIC, the corresponding BMIC may be transitioned to a sleep state by a Watchdog. After transitioning to the sleep state, there is no method of checking whether unintentional current consumption due to malfunction, burnout, or noise occurs in the BMIC. EP3290936 A1 relates to a system for monitoring cells in a battery pack that are connected in parallel.

**[Disclosure]**

**[Technical Problem]**

The present disclosure has been made in an effort to provide a battery system having advantages of diagnosing whether a plurality of BMICs constituting the battery system are normally operated.

**[Technical Solution]**

A battery system according to a feature of the invention includes a plurality of battery packs - each of the plurality of battery packs including a plurality of battery cells -; a plurality of slave battery management systems (BMSs) managing the plurality of battery packs with respect to each of the plurality of battery packs - each of the plurality of slave BMSs including a BMIC connected to a plurality of corresponding battery cells and measuring a plurality of cell voltages, and a relay turned on when the BMIC operates -; a plurality of first resistors located on a wiring extending between both ends of a power source in correspondence to the plurality of slave BMSs; a plurality of second resistors connected between one end of the plurality of relays and the wiring - the other ends of the plurality of relays connected to the wiring -; a third resistor connected between the power source and the plurality of first resistors on the wiring; and a master BMS determining positions and number of BMICs operating among the plurality of BMICs based on a sensing voltage obtained by dividing a voltage of the power source by at least one of the third resistor, the plurality of first resistors, and the plurality of second resistors.

Each of the plurality of slave BMSs may include a diode including an anode connected to the battery pack and constituting the relay and a photoMOS relay; and a transistor including one end connected to a cathode of the diode and the other end connected to the BMIC and operating under the control of the BMIC to supply power to the BMIC.

Each of the plurality of slave BMSs may further include a capacitor connected in parallel to the diode.

One end of the third resistor may be connected to the power source, the other end of the third resistor may be connected to one end of one of the plurality of first resistors, and the other end of a relay of one of the plurality of slave BMSs may be connected to one end of one of the plurality of first resistors.

One end of the relay of one of the plurality of slave BMSs may be connected to one end of one of the plurality of second resistors, and the other end of one of the plurality of second resistors may be connected to the wiring.

One end of another one of the plurality of first resistors may be connected to the other end of one of the plurality of first resistors, and the other end of a relay of another one of the plurality of slave BMSs may be connected to one end of anther one of the plurality of first resistors.

One end of the relay of the other one of the plurality of slave BMSs may be connected to one end of another one of the plurality of second resistors, and the other end of another one of the plurality of second resistors may be connected to the wiring.

The master BMS may store information about voltages obtained by dividing the voltage of the power source according to on or off of the plurality of relays, compare the sensing voltage with the information, and determine a number and positions of BMICs operating among the plurality of BMICs.

A battery system according to an example useful for understanding of the invention includes a first resistor including one end connected to one end of a power source; a plurality of second resistors connected in series between the other end of the first resistor and the other end of the power source; with respect to each of the plurality of second resistors, a plurality of relays and a plurality of third resistors connected in series between one end of the second resistor and the other end of the power source; with respect to each of the plurality of relays, a plurality of diodes constituting a photoMOS relay; a plurality of BMICs to which power is supplied when the plurality of diodes are conducted; and a master BMS determining positions and number of BMICs operating among the plurality of BMICs based on a sensing voltage obtained by dividing a voltage of the power source by at least one of the first resistor, the plurality of second resistors, and the plurality of third resistors.

In another example, one end of one of the plurality of second resistors may be connected to the other end of the first resistor, one end of one of the plurality of relays may be connected to one end of one of the plurality of second resistors, one end of one of the plurality of third resistors may be connected to the other end of one of the plurality of relays, and the other end of one of the plurality of third resistors may be connected to the other end of the power source.

In another example, one end of another one of the plurality of second resistors may be connected to the other end of one of the plurality of second resistors, one end of another one of the plurality of relays may be connected to one end of the other one of the plurality of second resistors, one end of another one of the plurality of third resistors may be connected to the other end of another one of the plurality of relays, and the other end of another one of the plurality of third resistors may be connected to the other end of the power source.

In another example, the battery system may further include a plurality of capacitors connected in parallel to the plurality of diodes, respectively.

In another example, the master BMS may store information about voltages obtained by dividing the voltage of the power source according to on or off of the plurality of relays, compare the sensing voltage with the information, and determine a number and positions of BMICs operating among the plurality of BMICs.

## [Advantageous Effects]

The present disclosure may provide a battery system capable of diagnosing whether a plurality of BMICs constituting the battery system are normally operated.

## [Description of the Drawings]

FIG. 1 is a diagram illustrating a battery system according to an embodiment.

FIG. 2 is a diagram schematically illustrating the inside of a slave BMS according to an embodiment.

FIG. 3 is a diagram schematically illustrating only the configuration for detecting an operation of a BMIC in a battery system according to an embodiment.

## [Mode for Invention]

Hereinafter, the embodiments disclosed in the present specification will be described in detail with reference to the accompanying drawings, but same or similar components are given the same or similar reference numerals, and redundant descriptions thereof will be omitted. The suffixes "module" and/or "part" for components used in the following description are given or mixed in consideration of only the ease of drafting the specification, and do not have meanings or roles distinct from each other by themselves. In addition, in describing the embodiments disclosed in the present specification, when it is determined that detailed descriptions of related known technologies may obscure the gist of the embodiments disclosed in the present specification, the detailed description thereof will be omitted.

The terms including an ordinal number, such as first, second, etc., may be used to describe various components, but the components are not limited by the terms. These terms are used only for the purpose of distinguishing one component from another.

It will be further understood that the terms "comprises" and/or "comprising," when used in the present specification, specify the presence of stated features, integers, steps, operations, components, and/or parts, but do not preclude the presence or addition of one or more other features, integers, steps, operations, components, parts, and/or combinations thereof.

A program implemented as a set of instructions embodying a control algorithm necessary to control another configuration may be installed in a configuration controlling another configuration under a specific control condition among configurations according to an embodiment. The control configuration may process input data and stored data according to the installed program to generate output data. The control configuration may include a non-volatile memory to store a program and a memory to store data.

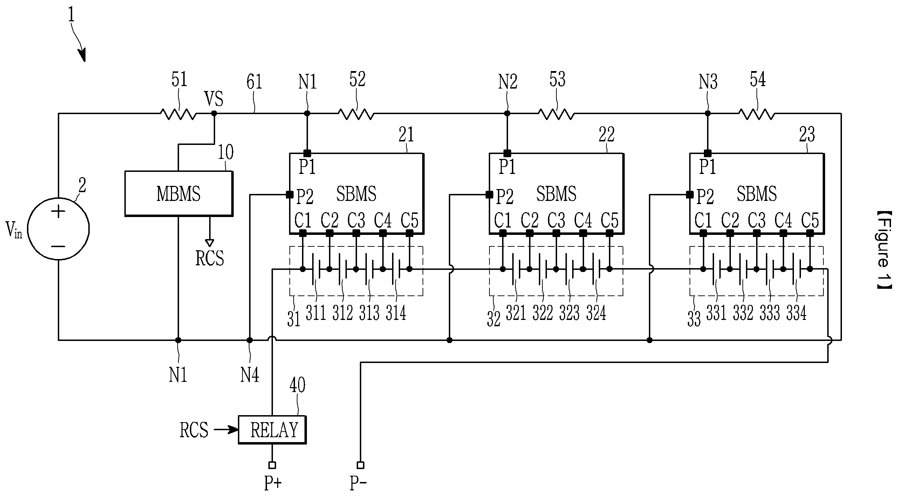

FIG. 1 is a diagram illustrating a battery system according to an embodiment.

As shown in FIG. 1, a battery system 1 includes a master battery management system (MBMS) 10, a plurality of slave battery management systems (SBMS) 21 to 23, a plurality of battery packs 31 to 33, and a relay 40.

As shown in FIG. 1, an input voltage Vin may be supplied from a power source 2 to the battery system 1. The power source 2 may be a commercial power source such as a wall power source, and may be, for example, 24 V. FIG. 1 shows three battery packs 31 to 33 and three slave BMSs 21 to 23, but this is an example and the invention is not limited thereto. According to the output power required of the battery system 1, a plurality of battery packs may be series, parallel, or series-parallel. Output terminals P+ and P- of the battery system 1 may be connected to a load or a charger.

Each of the plurality of battery packs 31 to 33 may include a plurality of battery cells (e.g., 311 to 314) connected in series. In FIG. 1, each of the plurality of battery packs 31 to 33 is illustrated as including four battery cells 311 to 314 connected in series, but this is an example and the invention is not limited thereto.

The relay 40 is connected between one electrode (e.g., a positive electrode) with respect to the plurality of battery packs 31 to 33 and the output terminal P+ of the battery system 1, and is switched by the control of the master BMS 10. The master BMS 10 may generate a relay control signal RCS for controlling the opening or closing of the relay 40 and supply the relay control signal RCS to the relay 40. Although only one relay is shown in FIG. 1, a relay may be further connected between the other electrode (e.g., a negative electrode) with respect to the plurality of battery packs 31 to 33 and the output terminal P-of the battery system 1.

Each of the plurality of slave BMSs 21 to 23 is connected to a corresponding battery pack among the plurality of battery packs 31 to 33. For example, the battery pack 31 includes a plurality of battery cells 311 to 314 connected in series, and the slave BMS 21 is connected to both ends of each of the plurality of battery cells 311 to 314 through terminals C1 to C5. The slave BMS 21 may be operated by a voltage supplied from the battery pack 31, measure a cell voltage of each of the plurality of battery cells 311 to 314, measure the current and temperature of the battery pack 31, and control and perform cell balancing on the plurality of battery cells 311 to 314.

In the same way, the battery pack 32 also includes a plurality of battery cells 321 to 324 connected in series and is connected to the slave BMS 22, and the battery pack 33 also includes a plurality of battery cells 331 to 334 connected in series and is connected to the slave BMS 23.

The master BMS 10 may transmit/receive information necessary for managing the battery system 1 through communication with the plurality of slave BMSs 21 to 23. For example, the master BMS 10 may control the output power of the battery system 1 or estimate a state of charge (SOC), a state of health (SOH), a state of power (SOP) of the plurality of battery packs 31 to 33, etc. To this end, the master BMS 10 may receive information about cell voltages, battery currents and temperatures of the plurality of battery packs 31 to 33 from the plurality of slave BMSs 21 to 23.

Although a configuration for communication between the master BMS 10 and the plurality of slave BMSs 21 to 23 is not shown in FIG. 1, it may be seen that information transmission and reception between the master BMS 10 and the plurality of slave BMSs 21 to 23 is possible through various communication methods in the known document and technology.

The power source 2 and the plurality of slave BMSs 21 to 23 are connected through a wiring 61 extending between both ends of the power source 2. Both ends of the power source 2 include one end of a positive potential and the other end of a negative potential, and a plurality of resistors 51 to 54 are connected in series between one end and the other end of the power source 2.

The plurality of slave BMSs 21 to 23 may transfer information about current consumed by the BMICs of the plurality of slave BMSs 21 to 23 to the master BMS 10 through the wiring 61. The slave BMS 21 is connected to the wiring 61 at a contact point N1 through a terminal P1 and connected to the wiring 61 at a contact point N4 through a terminal P2. The slave BMS 22 is connected to the wiring 61 at a contact point N2 through the terminal P1 and connected to the wiring 61 at a contact point N4 through the terminal P2. The slave BMS 23 is connected to the wiring 61 at the contact point N1 through the terminal P1 and connected to the wiring 61 at the contact point N4 through the terminal P2.

A resistor 51 is connected between the power source 2 and the contact point N1, a resistor 52 is connected between the contact point N1 and the contact point N2, a resistor 53 is connected between the contact point N2 and the contact point N3, and a resistor 54 is connected between the contact point N3 and the contact point N4.

The master BMS 10 may measure the voltage of the contact point N1, and detect an abnormal slave BMS among the plurality of slave BMSs 21 to 23 according to the measured voltage and control conditions with respect to the plurality of battery packs 31 to 33.

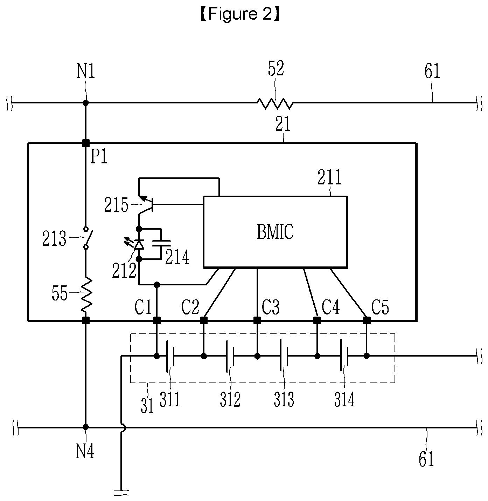

FIG. 2 is a diagram schematically illustrating the inside of a slave BMS according to an embodiment.

Although only the slave BMS 21 is shown in FIG. 2, the slave BMSs 22 and 23 shown in FIG. 1 may also have the same configuration as the slave BMS 21 shown in FIG. 2.

The slave BMS 21 includes a BMIC 211, a diode 212 and a relay 213 constituting a photoMOS relay, a bipolar junction transistor (BJT) 215, and a resistor 55.

In the slave BMS 21, a terminal C1 is connected to a positive electrode of the battery cell 311, a terminal C2 is connected to a negative electrode of the battery cell 311 and a positive electrode of the battery cell 312, a terminal C3 is connected to a negative electrode of the battery cell 312 and a positive electrode of the battery cell 313, a terminal C4 is connected to a negative electrode of the battery cell 313 and a positive electrode of the battery cell 314, and a terminal C5 is connected to a negative electrode of the battery cell 314. The BMIC 211 may measure a cell voltage of a battery cell (e.g., 311) based on a voltage difference between two adjacent terminals (e.g., C1 and C2) among the plurality of terminals C1 to C5.

The BMIC 211 receives power required for driving from the battery pack 31. A control voltage VB is supplied from the BMIC 211 to a base terminal of the BJT 215, and the BJT 215 is conducted by the control voltage VB so that power necessary for driving the BMIC 211 is supplied from the battery pack 31. The base and emitter terminals of the BJT 215 may be connected to the BMIC 211, the control voltage VB may be supplied from the BMIC 211 to the base terminal of the BJT 215, and power from the battery pack 31 may be supplied through the emitter terminal of the BJT 215.

A cathode of the diode 212 is connected to a collector terminal of the BJT 215, and an anode of the diode 212 is connected to a positive electrode of the battery pack 31 through the terminal C1. A capacitor 214 is connected in parallel between both ends of the diode 212, and thus, the voltage of both ends of the diode 212 may be smoothed. Then, the voltage of both ends of the diode 212 may be controlled as a voltage of a continuous waveform rather than a discontinuous transition waveform such as a pulse.

The relay 213 may be turned on (closed) while the diode 212 emits light and may inform the master BMS 10 that the BMIC 211 is consuming current. One end of the relay 213 is connected to the contact point N1, the other end of the relay 213 is connected to one end of the resistor 55, and the other end of the resistor 55 is connected to the contact point N4. That is, when the BMIC 211 operates and current flows to the BMIC 211, the relay 213 is turned on, and the resistor 55 may be connected between the contact point N1 and the contact point N4.

Each of the slave BMSs 22 and 23 also includes a BMIC, and when the BMIC operates and consumes current, a resistor is connected between the corresponding contact points N2 and N3 and a contact point N4.

Hereinafter, an embodiment in which a voltage VS (hereinafter referred to as a sensing voltage) varies according to whether the BMICs of the plurality of slave BMSs 21 to 23 operate and current flows will be described. The master BMS 10 may measure the sensing voltage VS and derive an operating BMIC among the BMICs of the plurality of slave BMSs 21 to 23.

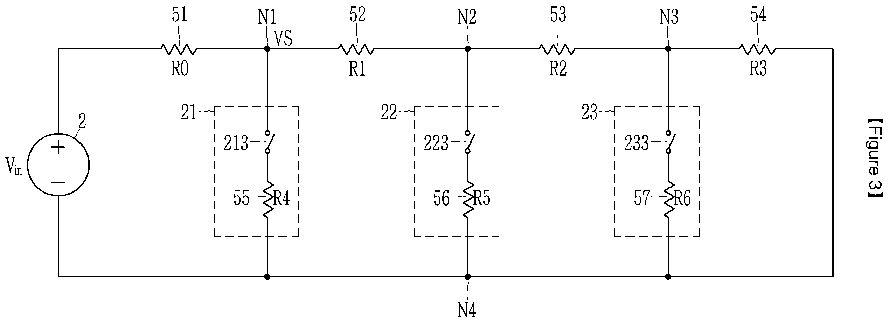

FIG. 3 is a diagram schematically illustrating only the configuration for detecting an operation of a BMIC in a battery system according to an embodiment.

As shown in FIG. 3, in the slave BMS 21, the relay 213 and the resistor 55 are connected in series between the contact point N1 and the contact point N4, in the slave BMS 22, the relay 223 and the resistor 56 are connected in series between the contact point N2 and the contact point N4, and in the slave BMS 23, the relay 233 and the resistor 57 are connected in series between the contact point N3 and the contact point N4. The resistors 56 and 57 and the relays 223 and 233 shown in FIG. 3 are components corresponding to the resistor 55 and the relay 213 of the slave BMS 21 shown in FIG. 2 in the slave BMSs 22 and 23.

A value of the sensing voltage VS may vary according to the position and number of relays that are in an on state (closed) among the plurality of relays 213 , 223 , and 233.

For example, when all of the plurality of relays 213, 223, and 233 are in an on state (closed), the sensing voltage VS has a value equal to Equation 1 below.

(Equation 1)

$$VS = Vin * [(R4 \parallel (R1 + (R5 \parallel (R2 + (R3 \parallel R4))))) / (R0 + (R4 \parallel (R1 + (R5 \parallel (R2 + (R3 \parallel R4))))))]$$

In Equation 1, R0 to R6 respectively denote resistance values of the resistors 51 to 57, Vin denotes a voltage of a power source, and the symbol "∥" indicates a parallel connection resistance value. The above definition is equally applied to Equations 2 to 8 below.

Among the plurality of relays 213, 223, and 233, when the relay 213 is in an on state and the relays 223 and 233 are in an off state (open), the sensing voltage VS has a value shown in Equation 2 below.

(Equation 2)

$$VS = Vin * [(R4 \parallel (R1 + R2 + R3)) / (R0 + (R4 \parallel (R1 + R2 + R3)))]$$

Among the plurality of relays 213, 223, and 233, when the relay 223 is in an on state and the relays 213 and 233 are in an off state (open), the sensing voltage VS has a value shown in Equation 3 below.

(Equation 3)

$$VS=Vin*[(R1+(R5\,\|\,(R2+R3)))/(R0+R1+(R5\,\|\,(R2+R3)))]$$

Among the plurality of relays 213, 223, and 233, when the relay 233 is in an on state and the relays 213 and 223 are in an off state (open), the sensing voltage VS has a value shown in Equation 4 below.

(Equation 4)

$$VS=Vin*[(R1+R2+(R3\,\|\,R6))/(R0+R1+R2+(R3\,\|\,R6))]$$

When the relays 213 and 223 among the plurality of relays 213, 223, and 233 are in an on state and the relay 233 is in an off state (open), the sensing voltage VS has a value shown in Equation 5 below.

(Equation 5)

$$VS=Vin*[(R4\,\|\,(R1+(R5\,\|\,(R2+R3))))/(R0+(R4\,\|\,(R1+(R5\,\|\,(R2+R3)))))]$$

When the relays 213 and 233 among the plurality of relays 213, 223, and 233 are in an on state and the relay 223 is in an off state (open), the sensing voltage VS has a value shown in Equation 6 below.

(Equation 6)

$$VS=Vin*[(R4\,\|\,(R1+R2+(R3\,\|\,R6)))/(R0+(R4\,\|\,(R1+R2+(R3\,\|\,R6))))]$$

When the relays 223 and 233 among the plurality of relays 213, 223, and 233 are in an on state and the relay 213 is in an off state (open), the sensing voltage VS has a value shown in Equation 7 below.

(Equation 7)

$$VS=Vin*[(R1+(R5\,\|\,(R2+(R3\,\|\,R4))))/(R0+R1+(R5\,\|\,(R2+(R3\,\|\,R4))))]$$

When all of the plurality of relays 213, 223, and 233 are in an off state (open), the sensing voltage VS has a value shown in Equation 8 below.

(Equation 8)

$$VS=Vin*[(R1+R2+R3)/(R0+R1+R2+R3)]$$

As described above, the sensing voltage VS may have different values depending on the positions and number of relays in an on state among the plurality of relays 213, 223, and 233. Accordingly, the master BMS 10 may measure the sensing voltage VS and determine the positions and number of BMICs operating according to the measured sensing voltage VS. For example, the master BMS 10 may store the values of the sensing voltage VS according to Equations 1 to 8 in a table, compare the measured sensing voltage VS with the values stored in the table, and determine the positions and number of BMICs operating among the BMICs of the plurality of slave BMSs 21 to 23 according to a comparison result. At this time, the master BMS 10 may set a plurality of corresponding resistance ranges with respect to the values stored in the table, and determine the positions and number of BMICs operating among the BMICs of the plurality of slave BMSs 21 to 23 according to the resistance range to which the measured sensing voltage VS belongs.

Through an embodiment, the master BMS 10 may check whether the BMIC is in a wake state or leakage current flows in the BMIC due to malfunction, noise, or burnout, even when the BMIC is in a sleep state in which the BMIC is not operating.

In FIGS. 1 and 2, the resistors 55, 56, and 57 are illustrated as being respectively located inside the slave BMSs 21, 22, and 23, but the invention is not limited thereto. For example, the resistors 55, 56, and 57 may be respectively connected between the terminal P2 and the contact point N4 of the slave BMSs 21, 22, and 23.

**Claims**

1. A battery system (1) comprising:

   a plurality of battery packs (31-33), each of the plurality of battery packs including a plurality of battery cells (311-314, 321-324, 331-334);
   a plurality of slave battery management systems, BMSs, (21-23) managing the plurality of battery packs (31-33) with respect to each of the plurality of battery packs (31-33), each of the plurality of slave BMSs (21-23) including a BMIC (211) connected to a plurality of corresponding battery cells and measuring a plurality of cell voltages, and a relay (213, 223, 233) turned on when the BMIC (211) operates;
   a plurality of first resistors (52-54) located on a wiring extending between both ends of a power source (2) in correspondence to the plurality of slave BMSs (21-23);
   a plurality of second resistors (55-57) connected between one end of the plurality of relays (213, 223, 233) and the wiring, the other end of the plurality of relays (213, 223, 233) connected to the wiring;
   a third resistor (51) connected between the power source and the plurality of first resistors on the wiring; and
   a master BMS (10) for determining positions and number of BMICs operating among the plurality of BMICs based on a sensing voltage obtained by dividing a voltage of the power source (2) by at least one of the third resistor (51), the plurality of first resistors (52-54), and the plurality of second resistors (55-57).

2. The battery system (1) of claim 1, wherein:

   each of the plurality of slave BMSs (21-23) includes
   a diode (212) including an anode connected to the battery pack and constituting the relay (213) and a photoMOS relay; and
   a transistor (215) including one end connected to a cathode of the diode and the other end connected to the BMIC and operating under the control of the BMIC to supply power to the BMIC.

3. The battery system (1) of claim 2, wherein:

   each of the plurality of slave BMSs (21-23) further includes
   a capacitor (214) connected in parallel to the diode (212).

4. The battery system (1) of claim 1, wherein:
   one end of the third resistor (55) is connected to the power source (2), the other end of the third resistor (55) is connected to one end of one of the plurality of first resistors (52-54), and the other end of a relay (213) of one of the plurality of slave BMSs (21-23) is connected to the one end of the one of the plurality of first resistors (52-54).

5. The battery system (1) of claim 4, wherein:
   one end of the relay (213) of the one of the plurality of slave BMSs is connected to one end of one of the plurality of second resistors (55-57), and the other end of the one of the plurality of second resistors (55-57) is connected to the wiring.

6. The battery system (1) of claim 4, wherein:

   one end of another one of the plurality of first resistors (52-54) is connected to the other end of the one of the plurality of first resistors (52-54), and
   the other end of a relay (213) of another one of the plurality of slave BMSs (21-23) is connected to the one end of the another one of the plurality of first resistors (52-54).

7. The battery system (1) of claim 6, wherein:
   one end of the relay (213) of the other one of the plurality of slave BMSs (21-23) is connected to one end of another one of the plurality of second resistors (55-57), and the other end of the another one of the plurality of second resistors (55-57) is connected to the wiring.

8. The battery system (1) of claim 1, wherein:

   the master BMS (10),
   stores information about voltages obtained by dividing the voltage of the power source (2) according to on or off of the plurality of relays (213), compares the sensing voltage with the information, and determines a number and positions of BMICs operating among the plurality of BMICs.

**Patentansprüche**

1. Batteriesystem (1), umfassend:

   eine Mehrzahl von Batteriepacks (31 - 33), wobei jede der Mehrzahl von Batteriepacks eine Mehrzahl von Batteriezellen (311 - 314, 321 - 324, 331 - 334) umfasst;
   eine Mehrzahl von Slave-Batterieverwaltungssystemen, BMS, (21 - 23), welche die Mehrzahl von Batteriepacks (31 - 33) in Bezug auf jeden der Mehrzahl von Batteriepacks (31 - 33) zu verwalten, wobei jedes der Mehrzahl von Slave-BMS (21 - 23) eine BMIC (211), welche mit einer Mehrzahl von entsprechenden Batteriezellen verbunden ist und eine Mehrzahl von Zellspannungen misst, und ein Relais (213, 223, 233) umfasst, welches angeschaltet wird, wenn die BMIC (211) in Betrieb ist;
   eine Mehrzahl von ersten Widerständen (52 - 54), welche an einer Schaltung angeordnet sind, welche sich zwischen beiden Enden einer Leistungsquelle (2) erstreckt, entsprechend der Mehrzahl von Slave-BMS (21 - 23);
   eine Mehrzahl von zweiten Widerständen (55 - 57), welche zwischen einem Ende der Mehrzahl von Relais (213, 223, 233) und der Schaltung geschaltet sind, wobei das andere Ende der Mehrzahl von Relais (213, 223, 233) mit der Schaltung verbunden ist,
   einen dritten Widerstand (51), welcher zwischen der Leistungsquelle und der Mehrzahl von ersten Widerständen an der Schaltung geschaltet ist; und
   ein Master-BMS (10) zum Bestimmen von Positionen und einer Anzahl von BMIC, welche unter der Mehrzahl von BMIC in Betrieb sind, auf Grundlage einer Messspannung, welche durch Teilen einer Spannung der Leistungsquelle (2) durch wenigstens einen aus dem dritten Widerstand (51), der Mehrzahl von ersten Widerständen (52 - 54) und der Mehrzahl von zweiten Widerständen (55 - 57) erhalten ist.

2. Batteriesystem (1) nach Anspruch 1, wobei:

   jedes aus der Mehrzahl von Slave-BMS (21 - 23) umfasst
   eine Diode (212), welche eine Anode, welche mit dem Batteriepack verbunden ist und das Relais (213) bildet, und ein PhotoMOS-Relais umfasst; und
   einen Transistor (215), welcher ein Ende, welches mit einer Kathode der Diode verbunden ist, und das andere Ende umfasst, welches mit der BMIC verbunden ist und unter der Steuerung der BMIC in Betrieb ist, um Leistung an die BMIC zu liefern.

3. Batteriesystem (1) nach Anspruch 2, wobei:

   jedes der Mehrzahl von Slave-BMS (21 - 23) ferner umfasst
   eine Kapazität (214), welche zu der Diode (212) parallel geschaltet ist.

4. Batteriesystem (1) nach Anspruch 1, wobei:
   ein Ende des dritten Widerstands (55) mit der Leistungsquelle (2) verbunden ist, das andere Ende des dritten Widerstands (55) mit einem Ende von einem aus der Mehrzahl von ersten Widerständen (52 - 54) verbunden ist und das andere Ende eines Relais (213) von einem aus der Mehrzahl von Slave-BMS (21 - 23) mit dem einen Ende des einen aus der Mehrzahl von ersten Widerständen (52 - 54) verbunden ist.

5. Batteriesystem (1) nach Anspruch 4, wobei:
   ein Ende des Relais (213) des einen aus der Mehrzahl von Slave-BMS mit einem Ende von einem aus der Mehrzahl von zweiten Widerständen (55 - 57) verbunden ist und das andere Ende des einen aus der Mehrzahl von zweiten Widerständen (55 - 57) mit der Schaltung verbunden ist.

6. Batteriesystem (1) nach Anspruch 4, wobei:

   ein Ende eines anderen aus der Mehrzahl von ersten Widerständen (52 - 54) mit dem anderen Ende des einen aus der Mehrzahl von ersten Widerständen (52 - 54) verbunden ist, und
   das andere Ende eines Relais (213) eines anderen aus der Mehrzahl von Slave-BMS (21 - 23) mit dem einen Ende des anderen aus der Mehrzahl von ersten Widerständen (52 - 54) verbunden ist.

7. Batteriesystem (1) nach Anspruch 6, wobei:
ein Ende des Relais (213) des anderen aus der Mehrzahl von Slave-BMs (21 - 23) mit einem Ende eines anderen aus der Mehrzahl von zweiten Widerständen (55 - 57) verbunden ist, und das andere Ende des anderen aus der Mehrzahl von zweiten Widerständen (55 - 57) mit der Schaltung verbunden ist.

8. Batteriesystem (1) nach Anspruch 1, wobei:

das Master-BMS (10),
Informationen über Spannungen speichert, welche durch ein Teilen der Spannung der Leistungsquelle (2) gemäß an oder aus der Mehrzahl von Relais (213) erhält, die Messspannung mit den Informationen vergleicht und eine Anzahl und Positionen von BMIC bestimmt, welche unter der Mehrzahl von BMIC in Betrieb sind.

**Revendications**

1. Système de batterie (1) comportant :

une pluralité de blocs-batteries (31-33), chacun de la pluralité de blocs-batteries comprenant une pluralité d'éléments de batterie (311-314, 321-324, 331-334) ;
une pluralité de systèmes de gestion de batterie, BMS, esclaves (21-23) gérant la pluralité de blocs-batteries (31-33) par rapport à chacun de la pluralité de blocs-batteries (31-33), chacun de la pluralité de BMS esclaves (21-23) comprenant un BMIC (211) connecté à une pluralité d'éléments de batterie correspondants et mesurant une pluralité de tensions d'élément, et un relais (213, 223, 233) activé lorsque le BMIC (211) fonctionne ;
une pluralité de premières résistances (52-54) situées sur un câblage s'étendant entre les deux extrémités d'une source d'alimentation (2) en correspondance avec la pluralité de BMS esclaves (21-23) ;
une pluralité de deuxièmes résistances (55-57) connectées entre une extrémité de la pluralité de relais (213, 223, 233) et le câblage, l'autre extrémité de la pluralité de relais (213, 223, 233) étant connectée au câblage ;
une troisième résistance (51) connectée entre la source d'alimentation et la pluralité de premières résistances sur le câblage ; et
un BMS maître (10) pour déterminer des positions et un nombre de BMIC fonctionnant parmi la pluralité de BMIC sur la base d'une tension de détection obtenue en divisant une tension de la source d'alimentation (2) par au moins une parmi la troisième résistance (51), la pluralité de premières résistances (52-54), et la pluralité de deuxièmes résistances (55-57).

2. Système de batterie (1) selon la revendication 1, dans lequel :

chacun de la pluralité de BMS esclaves (21-23) comprend
une diode (212) comprenant une anode connectée au bloc-batterie et constituant le relais (213) et un relais PhotoMOS ; et
un transistor (215) comprenant une extrémité connectée à une cathode de la diode et l'autre extrémité connectée au BMIC et fonctionnant sous la commande du BMIC pour fournir de l'énergie au BMIC.

3. Système de batterie (1) selon la revendication 2, dans lequel :

chacun de la pluralité de BMS esclaves (21-23) comprend en outre
un condensateur (214) connecté en parallèle à la diode (212).

4. Système de batterie (1) selon la revendication 1, dans lequel :
une extrémité de la troisième résistance (55) est connectée à la source d'alimentation (2), l'autre extrémité de la troisième résistance (55) est connectée à une extrémité d'une de la pluralité de premières résistances (52-54), et l'autre extrémité d'un relais (213) d'un de la pluralité de BMS esclaves (21-23) est connectée à ladite extrémité de ladite résistance de la pluralité de premières résistances (52-54).

5. Système de batterie (1) selon la revendication 4, dans lequel :
une extrémité du relais (213) dudit BMS esclave de la pluralité de BMS esclaves est connectée à une extrémité d'une de la pluralité de deuxièmes résistances (55-57), et l'autre extrémité de ladite résistance de la pluralité de deuxièmes résistances (55-57) est connectée au câblage.

6. Système de batterie (1) selon la revendication 4, dans lequel :

une extrémité d'une autre de la pluralité de premières résistances (52-54) est connectée à l'autre extrémité de ladite résistance de la pluralité de premières résistances (52-54), et
l'autre extrémité d'un relais (213) d'un autre de la pluralité de BMS esclaves (21-23) est connectée à ladite extrémité de l'autre de la pluralité de premières résistances (52-54).

7. Système de batterie (1) selon la revendication 6, dans lequel :
une extrémité du relais (213) de l'autre de la pluralité de BMS esclaves (21-23) est connectée à une extrémité d'une autre de la pluralité de deuxièmes résistances (55-57), et l'autre extrémité de l'autre de la pluralité de deuxièmes résistances (55-57) est connectée au câblage.

8. Système de batterie (1) selon la revendication 1, dans lequel :

le BMS maître (10),
stocke des informations sur des tensions obtenues en divisant la tension de la source d'alimentation (2) en fonction de l'activation ou de la désactivation de la pluralité de relais (213), compare la tension de détection aux informations, et détermine un nombre et des positions de BMIC fonctionnant parmi la pluralité de BMIC.

【Figure 1】

【Figure 2】

【Figure 3】

**REFERENCES CITED IN THE DESCRIPTION**

**Patent documents cited in the description**

- KR 1020210152521
- EP 3290936 A1